Europäisches Patentamt

European Patent Office

Office européen des brevets

(19)

(11)  **EP 0 654 538 B1**

(12)  **EUROPÄISCHE PATENTSCHRIFT**

(45) Veröffentlichungstag und Bekanntmachung des Hinweises auf die Patenterteilung:
**04.02.1998  Patentblatt 1998/06**

(51) Int Cl.6: **C21B 13/08**, C22B 7/02, C22B 7/04, C22B 19/04, C22B 13/02, C22B 19/30

(21) Anmeldenummer: **94202625.3**

(22) Anmeldetag: **13.09.1994**

(54) **Wälzverfahren zur Aufarbeitung von Zink, Blei und Eisenoxide enthaltenden Materialien**

Method for working up zinc-, lead- and iron oxide-bearing material by the rotary-kiln volatilising process

Procédé de traitement des matières contenant du zinc, du plomb et de l'oxyde ferrique selon le procédé de volatilisation au four tubulaire tournant

(84) Benannte Vertragsstaaten:
**DE ES FR GB IT**

(30) Priorität: **20.11.1993  DE 4339591**

(43) Veröffentlichungstag der Anmeldung:
**24.05.1995  Patentblatt 1995/21**

(73) Patentinhaber: **METALLGESELLSCHAFT AKTIENGESELLSCHAFT**
**60323 Frankfurt am Main (DE)**

(72) Erfinder:
- **Lommert, Hermann**
  **D-63263 Neu-Isenburg-Gravenbruch (DE)**
- **Samant, Gurudas, Dr.**
  **D-35112 Fronhausen (DE)**
- **Schlebusch, Detlev, Dr.**
  **D-61206 Wöllstadt (DE)**
- **Fischer, Karl-Heinz**
  **D-63263 Neu-Isenburg (DE)**

(56) Entgegenhaltungen:
EP-A- 0 089 075     DE-A- 2 936 143
DE-A- 3 131 898     DE-A- 3 427 631
US-A- 3 867 131

- STAHL UND EISEN, Bd.96, Nr.24, 2. Dezember 1976, DUSSELDORF DE Seiten 1233 - 1238 MACZEK ET AL. 'Versuche zur Verarbeitung von Hüttenwerksabfällen nach dem Wälzverfahren in einer Betriebsanlage'
- DATABASE WPI Week 8533, 1985 Derwent Publications Ltd., London, GB; AN 85-201293 & JP-A-60 128 228 (SUMITOMO METAL MINI KK) 9. Juli 1985
- STAHL UND EISEN, Bd.100, Nr.24, 1. Dezember 1980, DUSSELDORF DE Seiten 1438 - 1442 YASUTERU YAMADA 'Einsatz von metallurgischen Schlämmen und Stäuben im Drehrohrofen'
- DATABASE WPI Section Ch, Week 8341, Derwent Publications Ltd., London, GB; Class M25, AN 83-785163 & JP-A-58 141 345 (TOSHIN SEIKO KK (HIME-) HIMEJI TEKKO REFINE KK (NIKN ) NIPPON) 22. August 1983
- DATABASE WPI Week 8714, 1987 Derwent Publications Ltd., London, GB; AN 87-099498 & SU-A-1 249 070 (VNIIENERGOTSVETMET) 7. August 1986

**Beschreibung**

Die Erfindung betrifft ein Verfahren zur Aufarbeitung von Zink, Blei und Eisenoxide enthaltenden Materialien in einem Wälzofen mit Gegenstrom zwischen Beschickung und Gasatmosphäre.

In der Hüttenindustrie anfallende Stäube, Schlacken, Schlämme, Zwischenprodukte oder dergleichen enthalten in vielen Fällen Zn, Pb und Eisenoxide. Vor einer Weiterverarbeitung oder Deponie muß in vielen Fällen eine Aufarbeitung dieser Materialien erfolgen, bei der Zn und Pb bzw. deren Verbindungen aus den Materialien weitgehend entfernt werden. Diese Aufarbeitung erfolgt in Wälzöfen nach dem Wälzverfahren. Beim Wälzverfahren wird eine festen Kohlenstoff als Reduktionsmittel enthaltende Beschickung in das Beschickungsende des Drehrohrofens chargiert, Luft in das Austragsende axial eingeführt, im Gegenstrom zur Beschickung durch den Ofen geführt und das Abgas durch das Beschickungsende abgezogen. Durch den in der Beschickung vorhandenen Kohlenstoff liegen im Beschickungsbett reduzierende Verhältnisse vor, wodurch ZnO und PbO reduziert werden und als Metalldampf in die Ofenatmosphäre gelangen. Dort werden sie teilweise oder ganz wieder oxidiert, mit dem Abgas aus dem Drehrohrofen ausgetragen und aus dem Abgas abgeschieden. Die maximale Temperatur der Beschickung im Wälzofen liegt oberhalb des Erweichungspunktes der Beschickung. Die erforderliche Wärme wird durch Verbrennung von CO sowie Oxidation von Zn und Pb in der Ofenatmosphäre erzeugt. Gegebenenfalls wird zusätzlich Wärme durch einen Zentralbrenner in das Austragsende eingebracht.

Ein solches Wälzverfahren ist aus der DE-PS 31 31 898 bekannt. Die Beschickung besteht aus granulierten Stäuben, die in metallurgischen Raffinationsöfen anfallen und $Fe_2O_3$, ZnO und PbO enthalten, sowie körniger gashaltiger Kohle und Koks als Reduktionsmittel und Brennstoff. Die Menge des Reduktionsmittels entspricht der Menge, welche zur Reduktion des $Fe_2O_3$ zu FeO und des ZnO und PbO zu Zn und Pb sowie zur Erzeugung der hierzu erforderlichen Reduktionswärme notwendig ist. Der Wälzofen hat eine Reduktionszone mit reduzierender Atmosphäre und eine Oxidationszone mit oxidierender Atmosphäre im Materialbett. Die Reduktionszone erstreckt sich vom Beschickungsende über etwa 2/3 der Ofenlänge. Die Oxidationszone erstreckt sich vom Ende der Reduktionszone bis zum Austragsende. Das verdampfte Zn und Pb wird in der Oxidationszone unter gleichzeitiger Rückgewinnung von Wärme zu ZnO und PbO reoxidiert und mit dem Abgas aus dem Ofen ausgetragen. Weiterhin wird in der Oxidationszone FeO zu $Fe_3O_4$ und $Fe_2O_3$ reoxidiert. Die Temperatur in der Oxidationszone wird durch einen am Austragsende angeordneten Zentralbrenner erhöht. Die Temperatur im Ofen wird durch die eingebrachte Menge an Reduktionsmittel und Brennstoff, durch das Verhältnis von Koks zu Kohle im Reduktionsmittel und Brennstoff, durch Veränderung des Ofendruckes und durch den Zentralbrenner so eingestellt, daß die Temperatur in der Ofenatmosphäre im Bereich vom Eintragsende bis zu etwa 1/3 der Ofenlänge unter 700°C in reduzierender Atmosphäre bleibt, im anschließenden Bereich bis zu etwa 2/3 der Ofenlänge auf 700 bis 900°C in reduzierender Atmosphäre ansteigt und im letzten, die Oxidationszone einschließenden Drittel rasch auf mindestens 1200°C ansteigt, wobei das Maximum der Temperatur nahe am Austragsende liegt. Bei diesem Verfahren wird Kohle mit hohem Gehalt an flüchtigen Bestandteilen als Reduktionsmittel eingesetzt und damit die Durchsatzleistung des Ofens herabgesetzt. Außerdem ist ein Brenner erforderlich, wodurch die Abgasbelastung ebenfalls erhöht wird. Die Stäube müssen vor dem Einsatz granuliert werden, und die Granalien bei einer Temperatur von etwa 200°C getrocknet werden.

Der Erfindung liegt die Aufgabe zugrunde, das Wälzverfahren unabhängig vom Zink- und Bleigehalt der Ausgangsmaterialien möglichst wirtschaftlich und umweltschonend zu gestalten.

Die Lösung dieser Aufgabe erfolgt erfindungsgemäß durch ein Wälzverfahren zur Aufarbeitung von Zink, Blei und Eisenoxide enthaltenden Materialien in einem Wälzofen mit Gegenstrom zwischen Beschickung und Gasatmosphäre, in dem :

a) als Beschickung eine Mischung der Materialien mit reaktionsträgem kohlenstoffhaltigem Material in das Eintragsende des Wälzofens chargiert wird,

b) die Mischung das kohlenstoffhaltige Material in einer Menge enthält, die mindestens stöchiometrisch zur Reduktion des Zn- und Pb-Gehaltes der Beschickung ausreicht und maximal die 5-fache zur Reduktionsarbeit erforderliche stöchiometrische Menge beträgt, plus der zur Erzeugung der Reduktionswärme erforderlichen Menge,

c) vom Austragsende des Wälzofens Heißluft mit einer Temperatur von 500 bis 1000°C in der Schlußzone auf die Beschickung geblasen wird, wobei die Menge der Heißluft so eingestellt wird, daß in der Gasatmosphäre des Wälzofens ein unterstöchiometrisches Verhältnis von Sauerstoff zu oxidierbaren Bestandteilen besteht,

d) in der Schlußzone des Drehrohrofens in der Beschickung eine Temperatur von 1200 bis 1500°C und ein Sauerstoffpartialdruck eingestellt wird, daß ZnO weitgehend durch in der Beschickung vorhandenes metallisches Eisen reduziert wird und gleichzeitig das metallische Eisen weitgehend wieder reoxidiert wird,

e) ein Teil des in der Gasatmosphäre befindlichen Zinkdampfes im Wälzofen zu ZnO oxidiert wird,

f) die Temperatur und Zusammensetzung des Abgases so eingestellt wird, daß eine autotherme Nachverbrennung möglich ist,

g) das Abgas außerhalb des Wälzofens durch Zusatz von Luft vollständig nachverbrannt wird,

h) das nachverbrannte Abgas gekühlt und gereinigt wird, und

i) der aus dem Wälzofen ausgetragene Feststoff gekühlt wird.

Die zink- und bleihaltigen Stäube und das kohlenstoffhaltige Material werden unter Anfeuchtung mit Wasser in einem Mischer in eine krümelige Form gebracht. In den Mischer wird auch das kohlenstoffhaltige Material und evtl. Zuschläge eingesetzt. Als reaktionsträges, kohlenstoffhaltiges Material werden z.B. Koksgruß, Anthrazit und Petrolkoks eingesetzt. Die Korngröße des kohlenstoffhaltigen Materials liegt unter 20 mm und vorzugsweise unter 10 mm. Die stöchiometrische Menge des kohlenstoffhaltigen Materials ist auf den C-Fix-Gehalt des Materials bezogen. Unterhalb einer Temperatur im Bett von etwa 1200°C erfolgt neben einer Reduktion eines Teiles des ZnO- und PbO-Gehaltes zu metallischem Zn und Pb und Verflüchtigung dieser Metalle eine Reduktion von $Fe_2O_3$ und $Fe_3O_4$ zu FeO und teilweise zu metallischem Fe. Über etwa 1200°C wirkt das metallische Fe als Reduktionsmittel zur Reduktion von restlichem ZnO und PbO gemäß ZnO (PbO) + Fe = Zn (Pb) + FeO. Bei Anwesenheit von Schwefel im Bett, z.B. beim Einsatz von Petrolkoks, erfolgt die Verflüchtigung von Blei überwiegend in Form von PbS. Die zur Reduktion des ZnO- und PbO-Gehaltes stöchiometrisch erforderliche Menge an Kohlenstoff ist also die Menge, die zur Reduktion von ZnO und PbO durch Kohlenstoff und zur Reduktion von höheren Eisenoxiden zu FeO und so viel metallischem Fe erforderlich ist, wie metallisches Fe in der Schlußzone zur Reduktion von restlichem ZnO und PbO erforderlich ist. Mit steigendem Gehalt an höheren Eisenoxiden in der Beschickung erhöht sich die erforderliche stöchiometrische Menge an Kohlenstoff. Die Temperatur der in der Schlußzone auf die Beschickung geblasenen Heißluft beträgt vorzugsweise 700 bis 900°C. Die Länge der Schlußzone beträgt vorzugsweise etwa 10 bis 25 % der Ofenlänge gerechnet vom Austragsende des Drehrohrofens. In etwa den letzten 1 bis 2 m der Schlußzone vor dem Austragsende des Ofens wird vorzugsweise keine Heißluft auf das Beschickungsbett geblasen. Die Heißluft wird z.B. mittels mehrerer Düsen eingeblasen, die über die Länge der Einblaszone verteilt sind. Beispielsweise wird ein axial angeordnetes Rohr verwendet, das vom Austragsende in den Ofen ragt und das mehrere auf das Beschickungsbett gerichtete Düsen aufweist. Der Drehrohrofen ist weitgehend gegen das Eindringen von Falschluft abgedichtet. Falls Luft durch das Austragsende eingesaugt wird, muß diese bei der Einstellung des unterstöchiometrischen Verhältnisses von Sauerstoff zu oxidierbaren Bestandteilen in der gesamten Gasatmosphäre des Ofens berücksichtigt werden. Durch dieses unterstöchiometrische Verhältnis sowohl in der Schlußzone als auch im restlichen Ofen wird erreicht, daß nicht das gesamte dampfförmig in der Ofenatmosphäre vorliegende Zn und Pb im Ofen zu ZnO und PbO reoxidiert wird, und daß auch das in der Gasatmosphäre des Ofens vorliegende CO nur teilweise zu $CO_2$ verbrannt wird. Dadurch wird die Bildung von $NO_x$ vermieden oder stark verringert, sowie die Bildung von Zinkferrit aus eisenhaltigem Staub im Gasraum stark verringert. In der Schlußzone erfolgt bei einer Temperatur im Materialbett von über etwa 1200°C eine sehr schnelle Reduktion von ZnO und PbO und Verflüchtigung der Metalle. Gleichzeitig erfolgt ein entsprechender Wärmeentzug, wodurch ein Schmelzen von Beschickungsbestandteilen in der Schlußzone verhindert wird. Da in der Schlußzone metallisches Fe als Reduktionsmittel wirkt, wird der Kohlenstoffverbrauch verringert, da die Reduktion mittels metallischem Fe unabhängig vom CO-Partialdruck ist, während die Reduktion von ZnO und PbO mit Kohlenstoff vom CO-Partialdruck abhängig ist. Die Reduktion von ZnO und PbO mit

Kohlenstoff im Ofen in Zonen mit einer Materialtemperatur unter etwa 1200°C verläuft wesentlich langsamer, da vorher erst die höheren Eisenoxide zu metallischem Fe oder FeO reduziert werden. Die Temperatur in der Schlußzone wird vorzugsweise auf 1300 bis 1450°C eingestellt. Die maximale Temperatur wird am Ende der Einblasstrecke der heißen Gase in der Schlußzone erreicht und fällt dann ab. Die Reoxidation des Eisens erfolgt möglichst weitgehend zu $Fe_2O_3$. Die Reoxidation des Zn- und Pb-Dampfes in der Gasatmosphäre des Ofens erfolgt maximal zu etwa 80 % und vorzugsweise zu 50 bis 70 %. Sie erfolgt auf jeden Fall nur so weit, daß keine Überhitzungen im Ofenraum bzw. an der Beschickungsoberfläche eintreten, die zu Ansatzbildungen führen würden, und so, daß eine autotherme Nachverbrennung des Abgases außerhalb des Drehrohrofens erfolgen kann. Die Nachverbrennung kann mit vorgewärmter Luft erfolgen, wodurch eine hohe Temperatur erzielt wird und keine Dioxine existieren. In der Nachverbrennung werden CO, Zn, Pb, PbS und Kohlenwasserstoffe vollständig oxidiert. Vor der Nachverbrennung können Feststoffe aus dem Abgas abgeschieden werden, z.B. durch Schwerkraftabscheidung in Zyklonen oder Gaskammern. Durch die Abscheidung von eisenhaltigem Staub wird eine Ferritbildung bei der Nachverbrennung vermieden und die Qualität des Wälzoxids wird verbessert. Der abgeschiedene Staub kann in den Ofen zurückgeführt werden. Die Kühlung des Abgases kann durch direkten oder indirekten Wärmeaustausch erfolgen. Die Reinigung des Abgases erfolgt im allgemeinen in einer elektrostatischen Gasreinigung. Der ausgetragene Feststoff kann ebenfalls direkt oder indirekt gekühlt werden. Bei einer Kühlung mit Luft ist in einfacher Weise eine Wärmerückgewinnung möglich.

Die Vorteile der Erfindung bestehen darin, daß die Durchsatzleistung des Wälzofens gesteigert wird, und eine kostenmäßige Energieeinsparung erzielt wird. Die Qualität des aus dem Abgas abgeschiedenen ZnO und PbO wird verbessert, da wegen der höheren Durchsatzleistung eine größere Menge an Zn und Pb bei gleicher Oberfläche des Beschickungsbettes verflüchtigt wird, die Abgasgeschwindigkeit geringer ist und dementsprechend weniger Staub mitgerissen wird, und der Ferritanteil im Abgas geringer ist. Die Kornstruktur des aus dem abgeschiedenen ZnO und PbO bestehenden Wälzoxids ist besser und das Wälzoxid hat ein höheres Schüttgewicht. Diese Vorteile gelten auch für Ausgangsmaterialien mit hohem Zn- und Pb-Gehalt von 30 % und mehr. Infolge der hohen Temperatur in der Schlußzone ist der ausgetragene Wälzrückstand deponiefähig. Durch die Nachverbrennung werden im Abgas enthaltene Schadstoffe vernichtet. Da der Kohlenstoffgehalt im Ofen weitgehend verbraucht wird, erübrigt sich eine aufwendige Abtrennung von überschüssigem Kohlenstoff aus dem Austragsmaterial, wodurch die Investitionskosten ebenfalls verringert werden.

Eine Ausgestaltung der Erfindung besteht darin, daß in der Mischung gemäß (a) eine Basizität von

$$\frac{\text{Mol.-\% CaO + Mol.-\% MgO}}{\text{Mol.-\% SiO}_2 + \text{Mol.-\% Al}_2\text{O}_3} > 1$$

eingestellt wird. Eine Basizität von über 1 ergibt eine gute Verflüchtigung von Zink und Blei. Außerdem wird durch die basische Fahrweise die Bildung von Fayalitschlacke vermieden. Vorzugsweise wird die Basizität auf 1,5 bis 3 eingestellt, da diese Basizität eine besonders gute Verflüchtigung ergibt.

Eine Ausgestaltung besteht darin, daß die Kühlung des nachverbrannten Abgases gemäß (h) durch indirekten Wärmeaustausch mit Luft erfolgt, und die erwärmte Kühlluft als Heißluft gemäß (c) in den Wälzofen geleitet wird. Dadurch erfolgt eine besonders gute Wärmerückgewinnung und Energieersparnis im Verfahren.

Eine Ausgestaltung besteht darin, daß die Kühlung der nachverbrannten Abgase gemäß (h) von einer Temperatur über 400°C durch Quenchen mit Wasser auf eine Temperatur kurz oberhalb des Säuretaupunktes erfolgt. Dadurch wird eine Bildung von Dioxinen vermieden.

Es ist auch möglich, daß in die Schlußzone des Wälzofens hinter der Einblasstelle der Heißluft gemäß (c) Wasser auf die Beschickung gedüst wird. Das Wasser wird mit hohem Druck, etwa 30 bis 100 bar, aufgedüst, damit es in das Beschickungsbett eindringt. Die Wassermenge beträgt etwa die 2- bis 5-fache stöchiometrische Menge gemäß $C + H_2O = CO + H_2$ bezogen auf den restlichen C-Gehalt im Bett und auf die Menge an Wasser, die auf das Bett auftrifft. Dadurch wird ein Wärmegewinn im Ofen erzielt, und es erfolgt eine Vorkühlung des Materials, wodurch der Feststoff in bröseliger Form aus dem Ofen ausgetragen wird.

Die Erfindung wird anhand eines Beispiels näher erläutert.

Der Wälzofen hat eine Länge von 12 m und einen Innendurchmesser von 0,8 m. Er war mit einer Neigung von 2 % zum Austragsende hin angeordnet und wurde mit einer Drehzahl von 1,1 upm betrieben.

Aus zink- und bleihaltigem Elektro-Ofen-Staub aus der Stahlindustrie, Koks mit einer Korngröße unter 10 mm sowie Kalkstein als Zuschlagsstoff wurde in einem Mischer unter Zusatz von Wasser eine krümelige Mischung hergestellt, die eine Feuchtigkeit von 12 % hatte. Die Mischung enthielt 14 Gew.-% Koks, 2,9 Gew.-% Kalkstein bezogen auf trockenes Material und hatte eine Basizität von 2,2. Die Zusammensetzung der Bestandteile der Mischung sind in der nachfolgenden Tabelle angegeben.

| | Staub Gew.-% tr. | Koks Gew.-% tr. | Kalkstein Gew.-% tr. |
|---|---|---|---|
| $Fe_2O_3$ | 50,4 | 3,3 * | 0,1 |
| Zn | 24,8 | - | - |
| PbO | 3,8 | - | - |
| CdO | 0,03 | - | - |
| $SiO_2$ | 1,8 | 48,6 * | 0,6 |
| CaO | 6,5 | 4,9 * | 54,6 |
| $Al_2O_3$ | 1,8 | 33,4 * | 0,3 |
| MgO | 0,9 | 0,8 * | 0,5 |
| MgO | 1,6 | 0,4 * | 0,1 |
| $Na_2O$ | 1,0 | 1,6 * | 0,1 |

* Aschenanalyse in dem Koks

(fortgesetzt)

|  | Staub Gew.-% tr. | Koks Gew.-% tr. | Kalkstein Gew.-% tr. |
|---|---|---|---|
| $K_2O$ | 1,6 | 5,1 * | 0,02 |
| Cl | 2,4 |  | 0,01 |
| F | 0,4 |  | - |
| $S_{ges.}$ | 0,8 | 0,9 | 0,03 |
| Cfix | 1,3 | 80,7 |  |
| Rest | 0,87 | 1,0 * | 43,5 ** |
| Aschengehalt | - | 14,0 | - |
| Gehalt an fl. Bestandteilen | - | 5,3 | - |

\* Aschenanalyse in dem Koks

\*\* Glühverlust

225 kg/h der Mischung wurden über eine Dosiereinrichtung in das Eintragsende des Wälzofens eingetragen. Vom Austragsende des Wälzofens wurde Heißluft mit einer Temperatur von 900°C auf die Oberfläche der Beschickung geblasen. Die Heißluft wurde auf eine Strecke von 1,8 m, gerechnet vom Austragsende des Wälzofens, aufgeblasen. Die Menge der Heißluft wurde so eingestellt, daß in der Gasatmosphäre des Wälzofens ein unterstöchiometrisches Verhältnis von Sauerstoff zu oxidierbaren Bestandteilen bestand. In dem Abgas, das aus dem Eintragsende des Wälzofens abgezogen wurde, lag ein $\lambda$ von 0,7 bis 0,75 vor. Die Temperatur der Beschickung in der Schlußzone des Drehrohrofens, in der die Heißluft auf die Beschickung aufgeblasen wurde, lag bei 1270°C. Das aus dem Wälzofen abgezogene Abgas wurde in eine Staubkammer geleitet, in der zink-, blei- und eisenhaltiger Staub abgeschieden wurde. Die Menge des abgeschiedenen Staubes lag zwischen 60 bis 65 kg/h. Aus dem Austragsende des Wälzofens wurden 105 bis 110 kg/h behandelter Feststoffe ausgetragen. Die Zusammensetzung des abgeschiedenen Staubes und des Ofenaustrages sind in der nachfolgenden Tabelle angegeben.

|  | Staub (Gew.-% tr) | Ofenaustrag (Gew.-% tr) |
|---|---|---|
| $Fe_2O_3$ | 12,0 | 50,2 |
| FeO | 0,06 | 21,2 |
| ZnO | 64,6 | 1,2 |
| PbO | 9,9 | 0,2 |
| CdO | 0,08 | - |
| $SiO_2$ | 0,8 | 4,3 |
| CaO | 1,2 | 10,6 |
| $Al_2O_3$ | 1,2 | 3,4 |
| MgO | 0,3 | 1,2 |
| MnO | 0,8 | 2,3 |
| $Na_2O$ | 1,2 | 0,9 |
| $K_2$ | 1,1 | 1,6 |
| Cl | 4,8 | 0,6 |
| F | 0,3 | 0,3 |
| $S_{ges}$ | 1,1 | 0,8 |
| Cfix | 0,3 | 0,7 |
| Rest | 0,26 | 0,5 |

Das aus der Staubkammer austretende Gas wurde in einer Nachverbrennung autotherm bei etwa 1000°C durch Zugabe von Luft nachverbrannt. In der Nachverbrennung wurden im Gas vorhandene oxidierbare Bestandteile, wie CO, $H_2$, Zn, Pb, PbS und Kohlenwasserstoffe praktisch vollständig oxidiert. Das aus der Nachverbrennung austretende Gas wurde in einem Wärmeaustauscher im Wärmeaustausch gegen Luft abgekühlt, wobei die Luft auf 900°C erwärmt wurde und als Heißluft in den Wälzofen geleitet wurde. Anschließend wurde das nachverbrannte Abgas durch Quenchen mit Wasser auf eine Temperatur kurz oberhalb des Säuretaupunktes abgekühlt und nach der $SO_2$-Abscheidung in den Kamin geleitet. Die Abgasanalyse vor dem Kamin ergab folgende Werte:

| Dioxine und Furane | nicht nachweisbar |
|---|---|
| $NO_x$ | 60 mg/Nm$^3$ |
| $SO_2$ | < 10 mg/Nm$^3$ |
| CO | nicht nachweisbar |
| Kohlenwasserstoffe | nicht nachweisbar. |

Der Ofenaustrag wurde entsprechend der DEV-S4-Laugung für Deponiefähigkeit untersucht. Die Ergebnisse waren:

| pH-Wert | 10,5 |
|---|---|
| Leitfähigkeit | < 100 m S/m |
| Zink | < 1 mg/kg |
| Blei | < 0,1 mg/kg |
| Arsen | < 0,1 mg/kg |
| Antimon | < 0,1 mg/kg |
| Cadmium | < 0,05 mg/kg |
| Kupfer | < 1 mg/kg |
| Mangan | < 0,1 mg/kg |
| Nickel | < 0,1 mg/kg |
| Quecksilber | < 0,01 mg/kg |
| Selen | < 0,1 mg/kg |
| Cyanid | < 0,1 mg/kg |
| Nitrat | < 0,1 mg/kg |
| Chlor | < 0,5 mg/kg |
| Fluor | < 0,1 mg/kg |

**Patentansprüche**

1. Verfahren zur Aufarbeitung von Zink, Blei und Eisenoxide enthaltenden Materialien in einem Wälzofen mit Gegenstrom zwischen Beschickung und Gasatmosphäre, in dem

   a) als Beschickung eine Mischung der Materialien mit reaktionsträgem kohlenstoffhaltigem Material in das Eintragsende des Wälzofens chargiert wird,

   b) die Mischung das kohlenstoffhaltige Material in einer Menge enthält, die mindestens stöchiometrisch zur Reduktion des Zn- und Pb-Gehaltes der Beschickung ausreicht und maximal die 5-fache zur Reduktionsarbeit erforderliche stöchiometrische Menge beträgt, plus der zur Erzeugung der Reduktionswärme erforderlichen Menge,

   c) vom Austragsende des Wälzofens Heißluft mit einer Temperatur von 500 bis 1000°C in der Schlußzone auf die Beschickung geblasen wird, wobei die Menge der Heißluft so eingestellt wird, daß in der Gasatmosphäre des Wälzofens ein unterstöchiometrisches Verhältnis von Sauerstoff zu oxidierbaren Bestandteilen besteht,

   d) in der Schlußzone des Drehrohrofens in der Beschickung eine Temperatur von 1200 bis 1500°C und ein Sauerstoffpartialdruck eingestellt wird, daß ZnO weitgehend durch in der Beschickung vorhandenes metallisches Eisen reduziert wird und gleichzeitig das metallische Eisen weitgehend wieder reoxidiert wird,

   e) ein Teil des in der Gasatmosphäre befindlichen Zinkdampfes im Wälzofen zu ZnO oxidiert wird,

   f) die Temperatur und Zusammensetzung des Abgases so eingestellt wird, daß eine autotherme Nachverbrennung möglich ist,

   g) das Abgas außerhalb des Wälzofens durch Zusatz von Luft vollständig nachverbrannt wird,

h) das nachverbrannte Abgas gekühlt und gereinigt wird, und

i) der aus dem Wälzofen ausgetragene Feststoff gekühlt wird.

2. Verfahren nach Anspruch 1, dadurch gekennzeichnet, daß in der Mischung gemäß (a) eine Basizität von

$$\frac{\text{Mol.-\% CaO + Mol.-\% MgO}}{\text{Mol.-\% SiO}_2 + \text{Mol.-\% Al}_2\text{O}_3} > 1$$

eingestellt wird.

3. Verfahren nach Anspruch 1 oder Anspruch 2, dadurch gekennzeichnet, daß die Kühlung des nachverbrannten Abgases gemäß (h) durch indirekten Wärmeaustausch mit Luft erfolgt, und die erwärmte Kühlluft als Heißluft gemäß (c) in den Wälzofen geleitet wird.

4. Verfahren nach Anspruch 1 bis Anspruch 3, dadurch gekennzeichnet, daß die Kühlung der nachverbrannten Abgase gemäß (h) von einer Temperatur über 400°C durch Quenchen mit Wasser auf eine Temperatur kurz oberhalb des Säuretaupunktes erfolgt.

**Claims**

1. A process for treating materials which contain zinc, lead, and iron oxides in a Waelz process kiln with a countercurrent flow between the charge and the gas atmosphere, in which

a) a mixture of the materials with carbonaceous material with low reactivity is charged as a charge into the charging end of the Waelz process kiln,

b) the mixture contains the carbonaceous material in an amount which is at least stoichiometrically sufficient to reduce the Zn and Pb contained in the charge and is not in excess of 5 times the stoichiometric amount required for the work of reduction, plus the amount required to generate the heat of reduction,

c) hot air at a temperature from 500 to 1000°C is blown onto the charge in the final zone from the discharge end of the Waelz process kiln, the amount of hot air being set such that there is a hypostoichiometric ratio of oxygen to oxidisable components in the gas atmosphere of the Waelz process kiln,

d) in the charge in the final zone of the rotary kiln a temperature from 1200 to 1500°C and an oxygen partial pressure are set such that ZnO will substantially be reduced by metallic iron contained in the charge and the metallic iron will substantially be reoxidised at the same time,

e) a part of the zinc vapour contained in the gas atmosphere is oxidised to ZnO in the Waelz process kiln,

f) the temperature and composition of the exhaust gas are set so that autothermic afterburning can be effected,

g) the exhaust gas is completely afterburned outside the Waelz process kiln by an addition of air,

h) the afterburned exhaust gas is cooled and purified, and

i) the solids discharged from the Waelz process kiln are cooled.

2. A process according to Claim 1, characterised in that a basicity of

$$\frac{\text{mole \% CaO + mole \% MgO}}{\text{mole \% SiO}_2 + \text{mole \% Al}_2\text{O}_3} > 1$$

is set in the mixture in (a).

3. A process according to Claim 1 or Claim 2, characterised in that the cooling of the afterburned exhaust gas in (h) is effected by an indirect heat exchange with air and the heated cooling air is supplied as hot air into the Waelz process kiln in (c).

4. A process according to Claim 1 to Claim 3, characterised in that the afterburned exhaust gases are cooled in (h) from a temperature above 400°C to a temperature slightly above the acid dew point by quenching with water.

**Revendications**

1. Procédé de traitement de matériaux renfermant du zinc, du plomb et de l'oxyde de fer dans un four tournant, avec passage à contre-courant du chargement et de l'atmosphère gazeuse, dans lequel

   a) on charge comme chargement un mélange des matériaux avec du matériau carbonacé, inerte à réagir, à l'extrémité d'entrée du four tournant,
   b) le mélange renferme le matériau carbonacé en une quantité qui suffit au moins stoechiométriquement à la réduction de la teneur en Zn et Pb du chargement et qui représente au maximum 5 fois la quantité stoechiométrique nécessaire au travail de réduction plus la quantité nécessaire à la production de la chaleur de réduction,
   c) on insuffle sur le chargement, dans la zone de queue, par l'extrémité de déchargement du four tournant, de l'air chaud à une température de 500 à 1000°C, en réglant la quantité de l'air chaud de façon à avoir dans l'atmosphère gazeuse du four tournant un rapport hypostoechiométrique de l'oxygène aux constituants pouvant être oxydés,
   d) on établit dans la zone de queue du four tubulaire tournant, dans le chargement, une température de 1200 à 1500°C et une pression partielle d'oxygène de manière que ZnO soit dans une grande mesure réduit par du fer métallique présent dans le chargement et qu'en même temps le fer métallique soit dans une grande mesure réoxydé à nouveau,
   e) on oxyde, dans le four tournant, en ZnO une partie de la vapeur de zinc se trouvant dans l'atmosphère gazeuse,
   f) on règle la température et la composition de l'effluent gazeux de manière à ce qu'une postcombustion autotherme soit possible,
   g) on effectue une postcombustion complète de l'effluent gazeux à l'extérieur du four tournant par addition d'air,
   h) on refroidit et on épure l'effluent gazeux ayant subi la postcombustion,
   i) on refroidit la matière solide déchargée du four tournant.

2. Procédé suivant la revendication 1, caractérisé en ce qu'on règle dans le mélange suivant (a) une basicité de

$$\frac{CaO \text{ \% en mole} + MgO \text{ \% en mole}}{SiO2 \text{ \% en mole} + Al2O3 \text{ \% en mole}} > 1$$

3. Procédé suivant la revendication ou la revendication 2, caractérisé en ce qu'il consiste à effectuer le refroidissement de l'effluent gazeux suivant (h), ayant subi une postcombustion, par échange de chaleur indirect avec de l'air et à envoyer l'air de refroidissement chauffé comme air chaud suivant (c) au four tournant.

4. Procédé suivant la revendication 1 à la revendication 3, caractérisé en ce qu'il consiste à effectuer le refroidissement des effluents gazeux suivant (h), ayant subi une postcombustion, d'une température supérieure à 400°C par trempe à l'eau à une température juste au-dessus du point de rosée acide.